# EUROPÄISCHE PATENTSCHRIFT

(11) **EP 1 934 437 B1**
(45) Veröffentlichungstag und Bekanntmachung des Hinweises auf die Patenterteilung: **23.06.2010**
(21) Anmeldenummer: 06793339.0
(22) Anmeldetag: 07.09.2006
(51) Int. Cl.: F01L 1/34

(54) **STEUERVENTIL FÜR EINEN NOCKENWELLENVERSTELLER**
CONTROL VALVE FOR A CAMSHAFT ADJUSTER
SOUPAPE DE COMMANDE D'UN REGULATEUR DE L'ARBRE A CAMES

(30) Priorität: 05.10.2005 DE 102005047641
(43) Veröffentlichungstag der Anmeldung: 25.06.2008
(73) Patentinhaber: Schaeffler Technologies GmbH & Co. KG, 91074 Herzogenaurach (DE)
(72) Erfinder: HOPPE, Jens, 91056 Erlangen (DE); RÖHR, Andreas, 91336 Heroldsbach (DE)
(86) Internationale Anmeldenummer: PCT/EP2006/066147
(87) Internationale Veröffentlichungsnummer: WO 2007/039399

(56) Entgegenhaltungen:
- JP-A- 11 002 354
- US-A1- 2005 252 561

## Beschreibung

### Gebiet der Erfindung

Die Erfindung betrifft ein Steuerventil für eine Beeinflussung der Beaufschlagung eines Nockenwellenverstellers einer Brennkraftmaschine mit einem Druckmittel gemäß dem Oberbegriff des Anspruchs 1 und des Anspruchs 3. Weiterhin betrifft die Erfindung ein Steuerventil gemäß dem Oberbegriff des Anspruchs 6.

### Hintergrund der Erfindung

Aus den nicht vorveröffentlichten Patentanmeldungen DE 10 2004 038 160.7 sowie DE 10 2005 037 480.8 der Anmelderin ist ein Steuerventil für eine Beeinflussung der Beaufschlagung eines Nockenwellenverstellers einer Brennkraftmaschine mit einem Druckmittel bekannt, bei dem in einer Sacklochbohrung eines Ventilgehäuses ein Steuerkolben axial verschieblich ist. Das Steuerventil besitzt einen Druckmittelanschluss, zwei Tankanschlüsse und zwei Arbeitsanschlüsse, die entgegengesetzt wirkenden Arbeitskammern eines hydraulischen Nockenwellenverstellers zugeordnet sind. In einer axialen Position des Steuerkolbens ist in dem Steuerventil ein erster Arbeitsanschluss mit einem Tankanschluss und ein zweiter Arbeitsanschluss mit dem Druckmittelanschluss verbunden, so dass eine Stellbewegung des Nockenwellenverstellers herbeiführbar ist, bei der die dem zweiten Arbeitsanschluss zugeordnete Arbeitskammer ihr Volumen vergrößert. In einer anderen axialen Position des Steuerkolbens ist der zweite Arbeitsanschluss mit einem Tankanschluss verbunden und der erste Arbeitsanschluss mit dem Druckmittelanschluss verbunden, so dass eine entgegengesetzte Stellbewegung herbeiführbar ist, bei der die dem ersten Arbeitsanschluss zugeordnete Arbeitskammer ihr Volumen vergrößert. Zur Veränderung der axialen Position des Steuerkolbens weist dieser ein Druckstück auf, auf welches ein Aktuator zur Herbeiführung einer Verschiebung des Steuerkolbens einwirkt. Aus Herstellungsgründen ist das Druckstück separat vom Steuerkolben ausgebildet und mit einer außenliegenden Mantelfläche im Bereich einer innenliegenden Mantelfläche einer stirnseitigen Ausnehmung des Ventilgehäuses in das Ventilgehäuse eingepresst.

Die JP 11002354 zeigt ein Solenoid-Ventil, bei dem zur Verringerung von Verschleiß am Ventilkolben ein Flansch vorgesehen ist, in den ein Zwischenstück eingreift, welches vom Solenoid beaufschlagt den Ventilkolbenantrieb überträgt.

### Aufgabe der Erfindung

Der Erfindung liegt die Aufgabe zugrunde, ein Steuerventil mit einem verbessert integrierten Druckstück vorzuschlagen.

### Zusammenfassung der Erfindung

Erfindungsgemäß wird die Aufgabe der Erfindung durch die Merkmale des unabhängigen Anspruchs 1 gelöst. Eine alternative Lösung der der Erfindung zugrunde liegenden Aufgabe ist durch die Merkmale des Anspruchs 3 gegeben. Weiterhin wird die der Erfindung zugrunde liegende Aufgabe durch die Merkmale des unabhängigen Anspruchs 6 gelöst. Weitere Ausgestaltungen der Erfindung ergeben sich aus den abhängigen Ansprüchen 2, 4, 5 und 7 bis 9.

Der vorliegenden Erfindung liegt die Erkenntnis zugrunde, dass bei einer formund/oder reibschlüssigen Verbindung eines Druckstücks mit einem Steuerkolben zwischen Druckstück und Steuerkolben radial orientierte Kontaktkräfte erzeugt werden, die auf einer radialen elastischen und/oder plastischen Verformung des Druckstücks und/oder des Steuerkolbens beruhen und während eines Einpressens, beispielsweise mit einem Übermaß der außenliegenden Mantelfläche des Druckstücks gegenüber der innenliegenden Mantelfläche des Steuerkolbens, insbesondere unter gleichzeitiger Erwärmung, erzeugt werden.

Der Steuerkolben bewegt sich in einer durch eine Sacklochbohrung des Ventilgehäuses gebildeten Führungsbohrung. Für eine Gewährleistung
- der Wirkung von Steuerkanten des Steuerkolbens,
- einer guten Führung des Steuerkolbens in dem Ventilgehäuse und
- einer leichten Bewegbarkeit des Steuerkolbens ohne ein Klemmen des Steuerkolbens in dem Ventilgehäuse
   ist erforderlich, dass die Durchmesser der außenliegenden Mantelfläche des Steuerkolbens und der Führungsbohrung des Ventilgehäuses mit einer Passung ausgeführt sind. Hinsichtlich der Vorgabe der Durchmesser
- der außenliegenden Mantelfläche des Druckstücks,
- der innenliegenden Mantelfläche des Steuerkolbens und
- der außenliegenden Mantelfläche des Steuerkolbens
   sind die Geometrien der vorgenannten Bauteile sowie die Einpressvorgänge zu optimieren, was u. U. zu einem Zielkonflikt führt:

- Einerseits soll eine feste Verbindung des Druckstückes mit dem Steuerkolben erzielt werden, was eher große Kontaktkräfte zwischen Druckstück und Steuerkolben erfordert.
- Andererseits soll eine geringe Aufweitung der außenliegenden Mantelfläche in Folge des Einpressens gegeben sein, was eher kleine Kontaktkräfte zwischen Druckstück und Steuerkolben erfordert.

Die vorgenannte Optimierung kann unter Umständen dadurch erschwert sein, dass eine Anforderung an einen vorgegebenen, engen Passungsbereich zwischen Steuerkolben und Ventilgehäuse bei vorgegebenen Materialeigenschaften von Druckstück und Steuerkolben, insbesondere bei vorgegebener Steifigkeit, eine enge Toleranz für die Fertigung der Durchmesser der außenliegenden Mantelfläche des Druckstücks sowie der innenliegenden Mantelfläche des Steuerkolbens erfordert.

Die Erfindung schlägt zur Abhilfe vor, dass im Kontaktbereich zwischen Druckstück und Steuerkolben zumindest eine eine Kontaktfläche bildende Mantelfläche des Druckstücks und/oder des Steuerkolbens einen Teilbereich aufweist, der eine verringerte Steifigkeit gegenüber einer Verformung in radialer Richtung aufweist als ein anderer Teilbereich der Mantelfläche. Dies führt möglicherweise zu folgenden Vorteilen:
- Die Teilbereiche mit verringerter Steifigkeit können die Steifigkeit in Teilbereichen des Umfanges verringern, wodurch toleranzbedingte Abweichungen in der Fertigung der beteiligten Kontaktgeometrien zu einer kleineren Veränderung der hervorgehobenen Kontaktkräfte führen. Hierdurch wird die über den Einpressvorgang hergestellte Verbindung zwischen Druckstück und Steuerkolben weniger abhängig von den Fertigungstoleranzen.
- Andererseits liegt dieser Ausgestaltung der Erfindung die Erkenntnis zugrunde, dass für einen Kontakt zwischen zwei zylinderförmigen Mantelflächen die Kontaktkraft nicht konstant über den gesamten Umfang verteilt ist. Erfindungsgemäß können in den Teilbereichen verringerter Steifigkeit gezielt kleinere Kontaktkräfte vorgegeben werden, während in den weiteren Teilbereichen gezielt Kontaktbereiche großer Kontaktkräfte vorgesehen werden können.
- Weiterhin kann durch die Vorgabe der Dimensionen der Teilbereiche der verringerten Steifigkeit sowie die Auswahl der Steifigkeit, beispielsweise über die Materialwahl in den Teilbereichen, die erforderliche Fügekraft zum Einpressen des Druckstückes in den Steuerkolben konstruktiv vorgegeben werden.
- Durch Einsatz der Teilbereiche verringerter Steifigkeit können die radial wirkenden Kräfte im Kontaktbereich zwischen Druckstück und Steuerkolben verringert werden, und zwar auch bei Wahl eines verhältnismäßig steifen Grundmaterials von Druckstück und/oder Steuerkolben. Dies führt u. U. zu einer verringerten Aufweitung des Steuerkolbens im Einpressbereich.

Die Teilbereiche mit verringerter Steifigkeit können mit einem weicheren, nachgiebigeren Material ausgebildet sein, als die Teilbereiche der anderen Teilbereiche. Gemäß einer bevorzugten Ausgestaltung der Erfindung sind die Teilbereiche mit verringerter Steifigkeit mit radialen Ausnehmungen gebildet. Bei derartigen radialen Ausnehmungen kann es sich beispielsweise um radiale Bohrungen oder in axialer Richtung verlaufende Nuten oder spiralförmige Nuten handeln.
Die Ausnehmungen bilden damit Teilbereiche der Steifigkeit Null, so dass Kontaktkräfte zwischen der außenliegenden Mantelfläche des Steuerkolbens und der innenliegenden Führungsfläche des Ventilgehäuses nur in den abseits der Ausnehmungen liegenden Teilbereichen ausgebildet werden.

Die Ausnehmungen können radial nach außen in den Steuerkolben eingebracht werden oder aber radial nach innen in die äußere Mantelfläche des Druckstückes, wobei die Ausnehmungen sofort mit der Herstellung eingebracht sein können oder nachträglich, beispielsweise mittels spannender Fertigung wie Fräsen oder Bohren. Für den Fall, dass sowohl in den Steuerkolben als auch in das Druckstück Ausnehmungen eingebracht sind, können diese in radialer Richtung ineinander übergehen oder aber in radialer und/oder axialer Richtung gegeneinander versetzt sein.

Durch eine konstruktive Vorgabe der Erstreckung B der Ausnehmungen in Umfangsrichtung kann auf einfache Weise die Höhe der Fügekräfte vorgegeben werden. Ebenfalls denkbar ist, dass die Erstreckung der Ausnehmungen in Umfangsrichtung in axialer Richtung variiert, wodurch eine Variation der Kontaktkräfte und der elastischen Aufweitung des Steuerkolbens in axialer Richtung oder beispielsweise ein Anstieg der Fügekraft mit zunehmendem Einbringen des Druckstückes in den Steuerkolben vorgegeben werden kann.

Vorzugsweise sind die radialen Ausnehmungen multifunktional ausgebildet: Neben der Vorgabe der Füge- und Anpresskräfte können die radialen Ausnehmungen insbesondere für den Fall, dass diese durchgehend über die gesamte Länge des Druckstückes ausgebildet sind oder von der Stirnseite des Druckstücks ausgehen, als Kanäle dienen, die einen Innen- oder Druckraum des Steuerkolbens mit dem Äußeren des Steuerkolbens, insbesondere mit der dem Druckstück zugeordneten Stirnfläche, dienen. Beispielsweise kann über die Ausnehmungen eine Entlüftung eines Innenraumes des Kolbens erfolgen. Alternativ oder kumulativ ist es möglich, dass das in dem Innenraum angeordnete Druckmittel durch die mit den radialen Ausnehmungen gebildeten Kanäle in dem Bereich der Stirnseite des Steuerkolbens austritt. Beispielsweise kann im Bereich der Stirnseite ein elektromagnetischer Aktuator mit einem Magnetpin und geeigneter Lagerung sowie einem Ankerinnenraum vorgesehen sein. In diesem Fall kann das Druckmittel über die radialen Ausnehmungen zu einem Austausch des Druckmittels zu Schmierungszwecken und für eine Wärmeabfuhr mit dem Aktuator, insbesondere dem Ankerinnenraum, kommunizieren. Weiterhin kann ein derartiger Druckmittelstrom einer Schmierung einer Magnetlagerung dienen und/oder einer Verringerung der Reibung zwischen dem Druckstück und dem auf das Druckstück einwirkenden Magnetpin.

Eine Entlüftung des Innenraums des Steuerkolbens kann in dem Fall erfolgen, dass das durch die Ausnehmungen hindurchtretende Druckmittel von dem Innenraum des Steuerkolbens in einen drucklosen Zwischenraum zwischen dem Aktuator und dem Druckstück gefördert wird und von dort in einen Motorsumpf fließen kann. Durch eine Rotation des Steuerventiles im Betrieb kann im Druckmittel vorhandene Luft abgeschieden werden, welche ebenfalls über die radialen Ausnehmungen abgeführt werden kann.

Eine weitere alternative oder kumulative Lösung der der Erfindung zugrundeliegenden Aufgabe sieht im Einpressbereich des Druckstückes zwischen einer außenliegenden Mantelfläche des Steuerkolbens und einer Führungsbohrung des Ventilgehäuses ein Spiel vor. Diese Ausgestaltung der Erfindung trägt der Tatsache Rechnung, dass in Folge des Einpressens des Druckstückes eine mehr oder weniger große radiale Vergrößerung des zugeordneten Einpressbereiches des Steuerkolbens einhergeht, so dass sich in jedem Fall die Passung zwischen Steuerkolben und Ventilgehäuse verändert. Dies ist insbesondere dann von Nachteil, wenn die außenliegende Mantelfläche des Steuerkolbens im Einpressbereich des Druckstückes eine Führungsfläche bildet, die an der Führungsbohrung des Ventilgehäuses während der axialen Bewegung des Steuerkolbens anliegt und unter Umständen zusätzlich eine Dichtfunktion erfüllen soll. Erfindungsgemäß wird diese Führungsfläche von dem Einpressbereich des Druckstückes weg verlagert. Stattdessen wird im Einpressbereich des Druckstückes zwischen Steuerkolben und Ventilgehäuse ein Spiel vorgesehen, so dass auch für die radiale Aufweitung des Steuerkolbens in Folge des Einpressens des Druckstückes der Steuerkolben im Einpressbereich nicht zur Anlage an die Führungsbohrung des Ventilgehäuses kommt. Hierdurch kann ein Verklemmen des Steuerkolbens in der Führungsbohrung, u. U. auch unabhängig von etwaigen Toleranzen bei der Fertigung von Druckstück und/oder Steuerkolben und/oder Führungsbohrung, zuverlässig vermieden werden.

Für den Fall, dass die Führungsbohrung als durchgehende Sacklochbohrung mit konstantem Durchmesser, insbesondere in dem von dem Einspressbereich im Zuge der axialen Bewegung überdeckten Axialbereich, ausgebildet ist, kann das vorgenannte Spiel auf einfache Weise dadurch erzeugt werden, dass im Einpressbereich des Druckstückes die außenliegende Mantelfläche des Steuerkolbens einen Bereich reduzierten Durchmessers aufweist, der beispielsweise über eine Querschnittserweiterung in eine Führungsfläche übergeht.

Eine alternative oder kumulative Lösung der der Erfindung zugrunde liegenden Aufgabe ist durch die Merkmale des Anspruchs 6 gegeben. Demgemäß weist das Druckstück zumindest im Bereich einer dem Aktuator zugewandten Stirnfläche eine gehärtete Oberfläche auf. Bei derartiger Ausgestaltung ist es insbesondere nicht erforderlich, dass der gesamte Steuerkolben einem Härteprozess zugeführt wird, der der Anbindung oder dem Kontakt zwischen Aktuator und Druckstück Rechnung trägt. Für den Fall, dass eine derartige Härtung für das gesamte Steuerventil erfolgt, könnte dieses zu einem Verzug des Steuerkolbens führen, was auch nachteilige Auswirkungen auf die Ausbildung der Kontaktflächen zwischen Druckstück und Steuerkolben einerseits sowie dem Steuerkolben und dem Ventilgehäuse andererseits haben könnte. Vielmehr kann erfindungsgemäß das Druckstück separat von dem Steuerkolben gehärtet werden. Eine Härtung kann unter Ausnutzung des Rest-Kohlenstoffgehaltes des Druckstückes erfolgen, indem die Druckstücke in ein Härtebad eingebracht werden. Beispielsweise können Druckstücke für mehrere Steuerventile gemeinsam in ein Härtebad eingebracht werden.

Gemäß einer weiteren Ausgestaltung der Erfindung erfolgt eine Härtung der Oberfläche im Kontaktbereich zwischen Druckstück und Aktuator mittels eines Tiefzieh-Verfahrens. Der Einsatz eines Tiefzieh-Verfahrens bietet sich insbesondere für eine ungefähr topfförmige Ausgestaltung des Druckstückes mit einem U-förmigen Längsschnitt des Druckstücks aus.

Eine Erhöhung der Fertigungsgenauigkeit kann vorzugsweise dadurch erzielt werden, dass anschließend an einen Tiefzieh-Verfahrensschritt eine Kalibrierstufe eingesetzt wird, für welche das Druckstück anschließend an den Tiefzieh-Verfahrensschritt in eine weitere Matrize eingepresst wird, in der die Endmaße des Druckstückes zumindest angenähert werden.

Alternativ oder zusätzlich kann die gehärtete Oberfläche unter Einsatz einer Wärmebehandlung gehärtet werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft, ohne dass diese zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Kurze Beschreibung der Zeichnungen

Weitere Merkmale der Erfindung ergeben sich aus der folgenden Beschreibung und den zugehörigen Zeichnungen, in denen Ausführungsbeispiele der Erfindung schematisch dargestellt sind. Es zeigen:
- Figur 1: zeigt ein Steuerventil zur Ansteuerung eines hydraulischen Nockenwellenverstellers mit einem in einen Steuerkolben eingepressten Druckstück und einem Ventilgehäuse im Längsschnitt;
- Figur 2: zeigt eine erste erfindungsgemäße Ausgestaltung einer Verbindung eines Druckstücks mit einem Steuerkolben im Längsschnitt;
- Figur 3: die Verbindung des Druckstücks mit dem Steuerkolben gemäß Figur 2 bei Blickrichtung von einem Aktuator des Steuerventils;
- Figur 4: eine zweite erfindungsgemäße Ausgestaltung einer Verbindung eines Druckstücks mit einem Steuerkolben im Längsschnitt;
- Figur 5: zeigt die Verbindung zwischen Druckstück und Steuerkolben gemäß Figur 4 bei Blickrichtung von einem Aktuator des Steuerventils;
- Figur 6: eine weitere erfindungsgemäße Ausgestaltung eines Steuerkolbens mit in diesen eingepresstem Druckstück im Längsschnitt;
- Figur 7: dem Steuerkolben mit in diesen eingepresstem Druckstück bei Blickrichtung von einem Aktuator des Steuerventils.

### Ausführliche Beschreibung der Erfindung

Ein Nockenwellenversteller, wie dieser beispielsweise in dem eingangs genannten, nicht vorveröffentlichten Stand der Technik beschrieben ist, weist üblicherweise einen Stator und einen Rotor auf, wobei ein Antriebsrad drehfest mit dem Stator verbunden ist. Der Stator ist drehbar gegenüber dem Rotor gelagert, wobei der Stator mehrere in Umfangsrichtung voneinander beabstandete Ausnehmungen aufweist. Die Ausnehmungen sind durch sich von dem Rotor radial erstreckende Flügel in zwei Druckkammern getrennt, wobei eine Veränderung der Druckverhältnisse in den sich gegenüberliegenden Druckkammern mit einer Stellbewegung des Nockenwellenverstellers einhergeht.

Die Druckkammern sind über geeignete Versorgungsleitungen jeweils mit einem Arbeitsanschluss 1, 2 eines Steuerventils 3 verbunden. Das Steuerventil 3 besitzt einen in einem Ventilgehäuse 4 axial verschieblichen Steuerkolben 5. Zur Herbeiführung einer Stellbewegung des Nockenwellenverstellers sind je nach axialer Position des Steuerkolbens 5 in dem Ventilgehäuse 4 die Arbeitsanschlüsse 1, 2 mit einem Druckmittelanschluss 6 oder einem Tankanschluss 7 verbindbar. Das Steuerventil 3 ist vorzugsweise in eine zentrische axiale Ausnehmung des Rotors des Nockenwellenverstellers integriert.

Hinsichtlich weiterer Ausgestaltungen des Steuerventiles sowie dessen Integration in einen Nockenwellenversteller wird auf die Eingangs genannten, nicht vorveröffentlichten Patentanmeldungen der Anmelderin verwiesen.

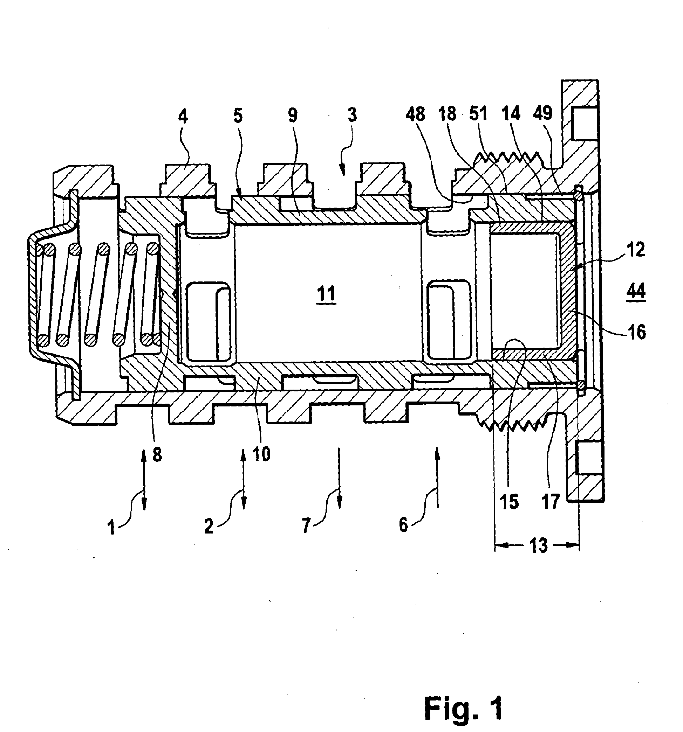

Gemäß Figur 1 ist der Steuerkolben 5 im Längsschnitt ungefähr U-förmig ausgebildet mit einem Grundschenkel 8 und zwei Seitenschenkeln 9, 10. Innenliegend von dem Steuerkolben 5 ist ein Innenraum 11 gebildet, der durch die Schenkel 8, 9, 10 sowie ein gegenüberliegend von dem Grundschenkel in die Seitenschenkel 9, 10 eingepresstes Druckstück 12 begrenzt ist. Das Druckstück 12 ist in einem Einpressbereich 13 unter Ausbildung einer radialen Kontaktkraft in den Steuerkolben 5 eingepresst. Im Einpressbereich 13 besitzt das Druckstück 12 eine außenliegende, zylinderförmige Mantelfläche 14 und der Steuerkolben 5 eine innenliegende zylinderförmige Mantelfläche 15, wobei die Mantelflächen 14, 15 eine Presspassung ausbilden.

Das Druckstück 12 besitzt einen U-förmigen Längsschnitt mit einem Grundschenkel 16 und zwei Seitenschenkeln 17, 18. Die U-förmigen Längsschnitte des Steuerkolbens 5 und des Druckstücks 12 sind bei entgegengesetztem Orientierungssinn ineinander eingesetzt. Die Länge der Seitenschenkel 17, 18 entspricht der Erstreckung des Einpressbereiches 13 in axialer Richtung.

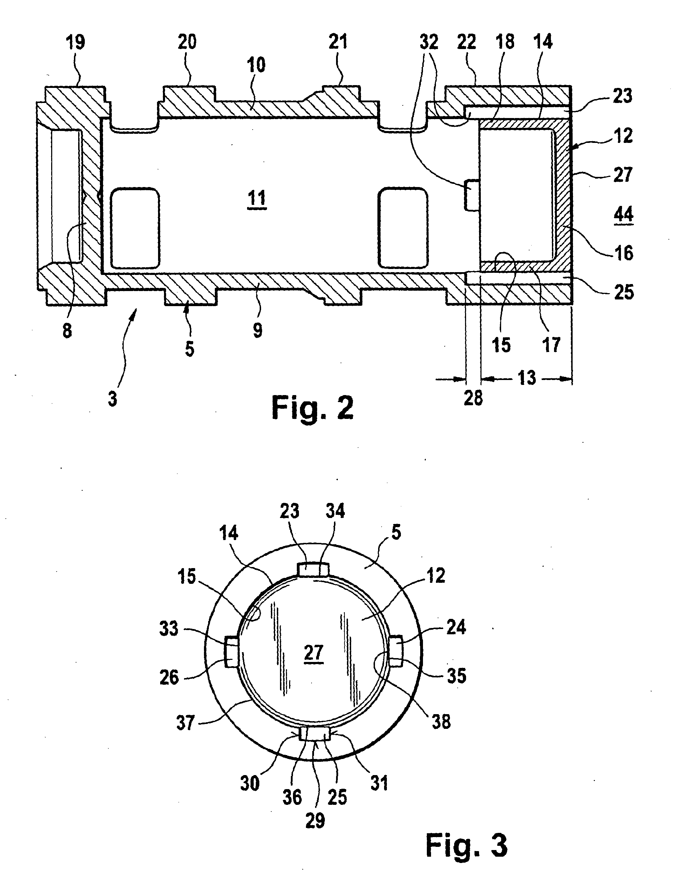

Gemäß Figur 3 besitzt der Steuerkolben 5 koaxiale, axial voneinander beabstandete Führungsflächen 19, 20, 21, 22, wobei die am dichtesten der dem Druckstück 12 zugeordneten Stirnseite 27 des Steuerkolbens 5 zugeordnete Führungsfläche 22 sich in dem Einpressbereich 13 erstreckt und gemäß Figur 2 über diesen hinausgeht.

Gemäß Figur 3 verfügt das Ventilgehäuse 4 über gleichmäßig in Umfangsrichtung verteilte, radial nach außen orientierte Ausnehmungen 23, 24, 25, 26. Die Ausnehmungen 23 bis 26 erstrecken sich nutartig, von der Stirnseite 27 ausgehend über den gesamten Einpressbereich 13 mit einem Überstand 28 über das Druckstück 12 in axialer Richtung. Die Ausnehmungen 23 bis 26 sind in dem in Figur 3 dargestellten Querschnitt ungefähr U-förmig ausgebildet mit einem Nutgrund 29 sowie zwei parallelen, ungefähr radial orientierten Begrenzungen 30, 31. Im Bereich des Überstandes 28 bilden die Ausnehmungen 23 bis 26 Öffnungen 32, die eine Druckmittelverbindung zwischen dem Innenraum 11 und den Ausnehmungen 23-26 schaffen. Das Druckstück 12 kann eine zylinderförmige außenliegende Mantelfläche 14 aufweisen ohne Ausnehmung. Für das in Figur 3 dargestellte Ausnehmungsbeispiel ist zu erkennen, dass auch das Druckstück 12 radial nach innen orientierte Ausnehmungen 33, 34, 35, 36 aufweist, die in die Ausnehmungen 23 bis 26 übergehen, wodurch Kanäle mit ungefähr rechteckförmigem Querschnitt gebildet sind. Mit dem Einpressen des Druckstückes 12 in den Steuerkolben 5 sind
- Teilbereiche 37 gegeben, an denen die Mantelfläche 14 des Druckstücks 12 unter Ausbildung einer Kontaktkraft an der Mantelfläche 15 des Steuerkolbens 5 anliegt, sowie
- in Umfangsrichtung zwischen den Teilbereichen 37 angeordnete Teilbereiche 38 gegeben, im Bereich derer Druckstück 12 und Steuerkolben 5 nicht in radialer Richtung aneinander anliegen, sondern in denen Druckstück 12 und Steuerkolben 5 Kanäle aufweisen.

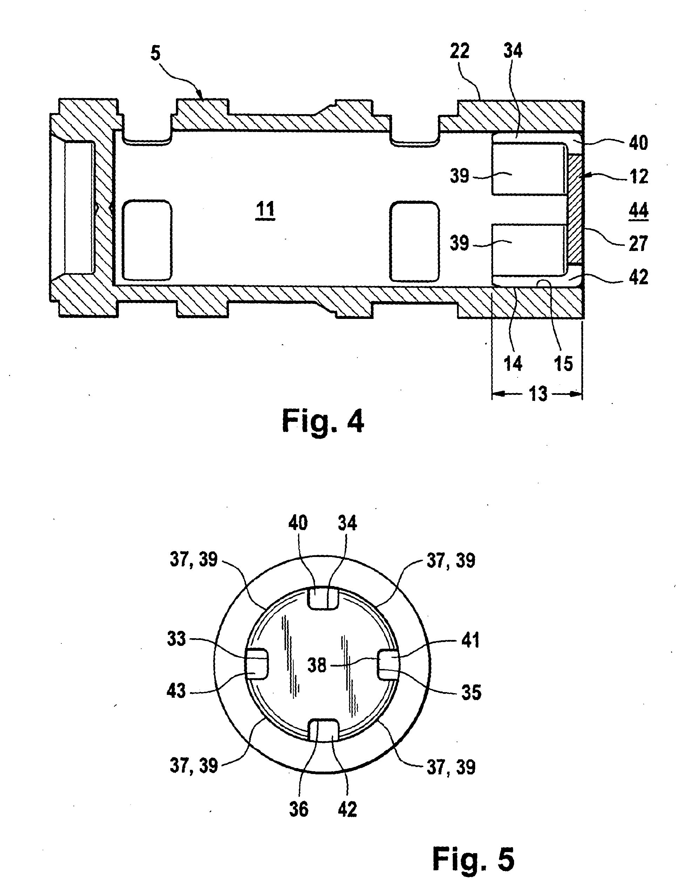

Für das in den Figuren 4 und 5 dargestellte Ausführungsbeispiel besitzt der Steuerkolben 5 keine Ausnehmungen 23 bis 26. Die Ausnehmungen 33 bis 36 des Druckstücks 12 sind mit gegenüber dem Ausführungsbeispiel gemäß Figuren 2 und 3 vergrößerter Tiefe derart ausgebildet, dass diese sich durch die Seitenschenkel 17, 18 vollständig hindurch erstrecken, so dass das Druckstück 12 im Bereich der Seitenschenkel 17, 18 nicht umlaufend ausgebildet ist, sondern lediglich mit sich zwischen den Ausnehmungen 36 bis 33 in den Teilbereichen 37 erstreckenden "Fingern" 39. In Folge der vergrößerten Tiefe der Ausnehmungen 33 bis 36 bilden die Ausnehmungen 33 bis 36 im Bereich der Stirnseite 27 Öffnungen 40, 41, 42, 43, im Bereich derer eine unmittelbare Druckmittelverbindung zwischen dem Innenraum 11 und der Umgebung 44 der Stirnseite 27 des Steuerkolbens 5 gegeben ist.

Bei der Umgebung 44 handelt es sich insbesondere um eine Kontaktfläche zwischen dem Druckstück und einem in den Figuren nicht dargestellten Aktuator, unter Umständen mit einer Druckmittelverbindung mit einem Motorsumpf und/oder weiteren Bauelementen, Schmierstellen oder Kühlstellen des Aktuators.

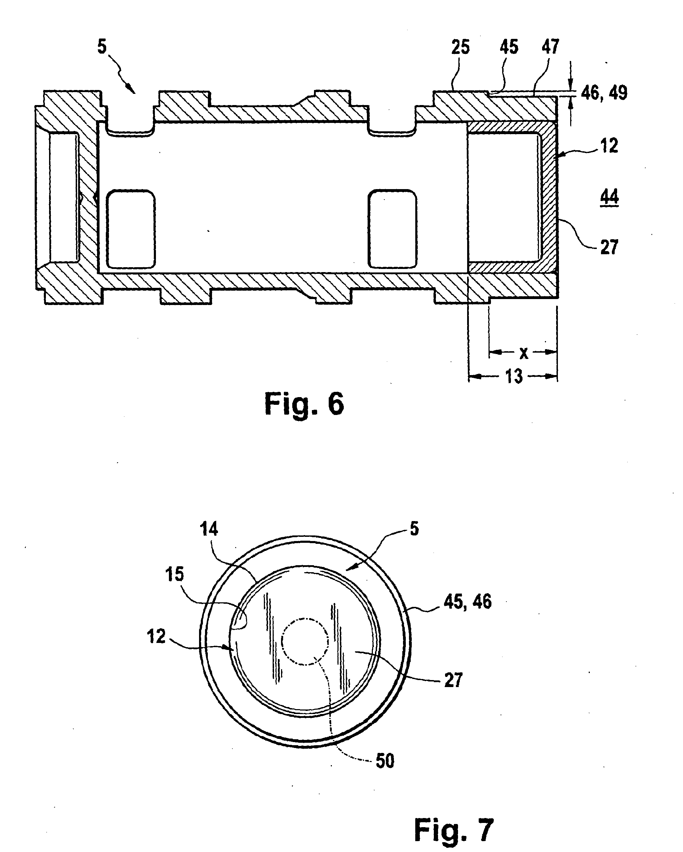

Für das in den Figuren 6 und 7 dargestellte Ausführungsbeispiel besitzt die äuβere Mantelfläche des Steuerkolbens 5 im Bereich der dem Druckstück 12 zugeordneten Stirnseite 27 einen Teilbereich 47 mit zylindrischer Mantelfläche, der der Führungsfläche 22 mit einem Absatz 45 mit einer Querschnittsverringerung 46 in Richtung der Stirnseite 27 vorgelagert ist. Für den in das Ventilgehäuse eingesetzten Steuerkolben 5 bildest sich zwischen einer innenliegenden Mantelfläche 48 des Ventilgehäuses 4 und dem Teilbereich 47 ein radial umlaufender Spalt 49 aus, dessen Höhe der Querschnittsverringerung 46 entspricht. Um im Teilbereich 47 einen Kontakt zwischen Steuerkolben 45 und Ventilgehäuse 4 zu vermeiden, wird die Querschnittsverringerung 46 konstruktiv geeignet vorgegeben, um der zu erwartenden Aufweitung des Steuerkolbens 5 in Folge des Einpressens des Druckstückes 12 Rechnung zu tragen. Dies bedeutet bspw., dass für eine Vergrößerung der Vorgabe der Überdeckung der Pressverbindung die Querschnittsverringerung 46 vergrößert ausgebildet sein muss.

Die Länge x des Teilbereichs 47 ist an den Bereich anzupassen, in dem eine Querschnittserweiterung des Steuerkolbens 5 in Folge des Einpressens des Druckstückes 12 erwartet wird. Für das in den Figuren 6 und 7 dargestellte Ausführungsbeispiel ist x kleiner als der Einpressbereich 13, so dass sich der Einpressbereich 13 bis ungefähr zur Mitte des Führungsbereiches 22 erstreckt.

Die Stirnseite 27 des Druckstückes 12 weist eine Kontaktfläche 50 auf, im Bereich derer ein Aktuator, insbesondere ein Magnetpin oder ein Stößel des Aktuators, auf das Druckstück 12 einwirkt, um den Steuerkolben 5 axial in dem Ventilgehäuse 4 zu bewegen. Zur Vermeidung eines Verschleißes des Druckstückes 12 im Bereich der Kontaktfläche 50 kann die Kontaktfläche 50, die Stirnseite 27 des Druckstücks 12 oder die Oberfläche des gesamten Druckstückes 12 gehärtet sein.

Eine derartige Härtung kann einerseits durch eine Tiefziehfertigung mit anschließender Kalibrierstufe und andererseits durch eine entsprechende Wärmebehandlung des Druckstücks 12 vorgenommen werden. Eine derartige Härtung erfolgt damit lediglich für das Druckstück 12, wodurch eine gesonderte Behandlung des gesamten Steuerkolbens 5 zur Gewährleistung einer dauerfesten Kontaktfläche vermieden ist.

Mittels der Ausnehmungen 23 bis 26 sowie 33 bis 36 kann eine Entlüftung des Innenraumes 11 erfolgen und/oder ein ausreichender Leckage-Volumenstrom für eine Versorgung einer Lagerung eines Aktuators, beispielsweise einer Lagerung eines Magneten, mit einem Druckmittel gewährleistet werden.

Die Ausnehmungen 23 bis 26 und 33 bis 36 stellen eine partielle Verringerung des Fügedurchmessers dar, wodurch die Auf- bzw. Einpresskräfte beeinflusst werden können. Insgesamt kann durch die erfindungsgemäßen Maßnahmen die Fertigung des Steuerkolbens 5 mit Druckstück 12 vereinfacht werden. Die Breite B der Ausnehmungen 23 bis 26 und 33 bis 36, also insbesondere die Breite des Nutgrundes 29 kann konstruktiv geeignet vorgegeben und variiert werden, um die Höhe der erforderlichen Fügekräfte und die Haltekräfte in der Verbindung zu beeinflussen. Ziel bei der Vorgabe der Breite B ist es, eine Aufweitung des Steuerkolbens 5 im Einpressbereich 13 zu vermeiden, um ein Klemmen des Steuerkolbens 5 in dem Ventilgehäuse 4 zu vermeiden.

Im Einpressbereich 13 besitzt der Steuerkolben 15 eine außenliegenden Mantelfläche 51.

### Bezugszeichenliste

- 1: Arbeitsanschluss
- 2: Arbeitsanschluss
- 3: Steuerventil
- 4: Ventilgehäuse
- 5: Steuerkolben
- 6: Druckmittelanschluss
- 7: Tankanschluss
- 8: Grundschenkel
- 9, 10: Seitenschenkel
- 11: Innenraum
- 12: Druckstück
- 13: Einpressbereich
- 14, 15: Mantelfläche
- 16: Grundschenkel
- 17, 18: Seitenschenkel
- 19-22: Führungsfläche
- 23-26: Ausnehmung
- 27: Stirnseite
- 28: Überstand
- 29: Nutgrund
- 30, 31: Begrenzung
- 32: Öffnung
- 33-36: Ausnehmung
- 37, 38: Teilbereich
- 39: Finger
- 40-43: Öffnung
- 44: Umgebung
- 45: Absatz
- 46: Querschnittsverringerung
- 47: Teilbereich
- 48: Mantelfläche
- 49: Spalt
- 50: Kontaktfläche
- 51: Mantelfläche

## Patentansprüche

1. Steuerventil für eine Beeinflussung der Beaufschlagung eines Nockenwellenverstellers einer Brennkraftmaschine mit einem Druckmittel mit
a) einem Ventilgehäuse (4) und
b) einem in dem Ventilgehäuse (4) angeordneten, axial verschieblichen Steuerkolben (5), wobei
c) in Abhängigkeit der axialen Position des Steuerkolbens (5) eine Beaufschlagung eines Druckmittelanschlusses (6), eines Tankanschlusses (7) und zumindest eines Arbeitsanschlusses (1, 2) mit einem Druckmittel veränderbar ist und
d) der Steuerkolben (5) ein Druckstück (12) aufweist,
da) welches in einem Einpressbereich (13) mit einer außenliegenden Mantelfläche (14) in eine innenliegende Mantelfläche (15) einer stirnseitigen Ausnehmung des Steuerkolbens (5) in den Steuerkolben (5) eingepresst ist und
db) auf welches ein Aktuator zur Herbeiführung einer Verschiebung des Steuerkolbens (5) einwirkt,
**dadurch gekennzeichnet, dass**
e) die außenliegende und/oder die innenliegende Mantelfäche zumindest einen Teilbereich (38) aufweist, der eine kleinere Steifigkeit gegenüber einer Verformung in radialer Richtung aufweist als ein anderer Teilbereich (37).

2. Steuerventil nach Anspruch 1, **dadurch gekennzeichnet, dass** Teilbereiche (38) mit verringerter Steifigkeit mit radialen Ausnehmungen (23-26; 33-36) gebildet sind.

3. Steuerventil für eine Beeinflussung der Beaufschlagung eines Nockenwellenverstellers einer Brennkraftmaschine mit einem Druckmittel mit
a) einem Ventilgehäuse (4) und
b) einem in dem Ventilgehäuse (4) angeordneten, axial verschieblichen Steuerkolben (5), wobei
c) in Abhängigkeit der axialen Position des Steuerkolbens (5) eine Beaufschlagung eines Druckmittelanschlusses (6), eines Tankanschlusses (7) und zumindest eines Arbeitsanschlusses (1, 2) mit einem Druckmittel veränderbar ist und
d) der Steuerkolben (5) ein Druckstück (12) aufweist,
da) welches in einem Einpressbereich (13) mit einer außenliegenden Mantelfläche (14) in eine innenliegende Mantelfläche (15) einer stirnseitigen Ausnehmung des Steuerkolbens (5) in demn Steuerkolben (5) eingepresst ist und
db) auf welches ein Aktuator zur Herbeiführung einer Verschiebung des Steuerkolbens (5) einwirkt,
**dadurch gekennzeichnet, dass**
e) im Einpressbereich (13) des Druckstücks (12) zwischen einer außenliegenden Mantelfläche (51) des Steuerkolbens (5) und einer Führungsbohrung (48) des Ventilgehäuses (4) ein Spalt (49) vorgesehen ist.

4. Steuerventil nach Anspruch 3, **dadurch gekennzeichnet, dass** im Einpressbereich (13) des Druckstücks (12) die außenliegende Mantelfläche (51) des Steuerkolbens (5) einen Teilbereich (47) reduzierten Durchmessers (Querschnittsverringerung 46) aufweist.

5. Steuerventil nach Anspruch 4, **dadurch gekennzeichnet, dass** an den Teilbereich (47) reduzierten Durchmessers eine Führungsfläche (22) des Steuerkolbens (5) anschließt.

6. Steuerventil für eine Beeinflussung der Beaufschlagung eines Nockenwellenverstellers einer Brennkraftmaschine mit einem Druckmittel mit
a) einem Ventilgehäuse (4),
b) einem in dem Ventilgehäuse (4) angeordneten, axial verschieblichen Steuerkolben (5),
wobei
c) in Abhängigkeit der axialen Position des Steuerkolbens (5) eine Beaufschlagung eines Druckmittelanschluss (6), eines Tankanschlusses (7) und zumindest eines Arbeitsanschlusses (1, 2) mit einem Druckmittel veränderbar ist und
d) der Steuerkolben (5) ein Druckstück (12) aufweist, auf welches ein Aktuator zur Herbeiführung einer Verschiebung des Steuerkolbens (5) einwirkt,
**dadurch gekennzeichnet, dass**
e) das Druckstück (12) zumindest im Bereich einer mit dem Aktuator zusammenwirkenden Kontaktfläche (50) eine gehärtete Oberfläche aufweist.

7. Steuerventil nach Anspruch 6, **dadurch gekennzeichnet, dass** die gehärtete Oberfläche unter Einsatz eines Tiefzieh-Verfahrens gehärtet ist.

8. Steuerventil nach Anspruch 7, **dadurch gekennzeichnet, dass** anschließend an den Einsatz des Tiefzieh-Verfahrens eine Kalibrierstufe eingesetzt ist.

9. Steuerventil nach einem der Ansprüche 6 bis 8, **dadurch gekennzeichnet, dass** die gehärtete Oberfläche unter Einsatz einer Wärmebehandlung gehärtet ist.

## Claims

1. Control valve for influencing the action of a pressure medium on a camshaft adjuster of an internal combustion engine, having
a) a valve housing (4) and
b) an axially movable control piston (5) which is arranged in the valve housing (4),
c) with it being possible for the action of a pressure medium on a pressure medium port (6), on a tank port (7) and on at least one working port (1, 2) to be varied as a function of the axial position of the control piston (5) and
d) with the control piston (5) having a thrust piece (12)
da) which, in a pressing-in region (13), is pressed with an outer lateral surface (14) into the control piston (5) into an inner lateral surface (15) of an end-side recess of the control piston (5) and
db) which is acted on by an actuator for generating a movement of the control piston (5),
**characterized in that**
e) the outer and/or inner lateral surface has at least one partial region (38) which has a lower rigidity with regard to a deformation in the radial direction than another partial region (37).

2. Control valve according to Claim 1,
**characterized in that** partial regions (38) with reduced rigidity are formed with radial recesses (23-26; 33-36).

3. Control valve for influencing the action of a pressure medium on a camshaft adjuster of an internal combustion engine, having
a) a valve housing (4) and
b) an axially movable control piston (5) which is arranged in the valve housing (4),
c) with it being possible for the action of a pressure medium on a pressure medium port (6), on a tank port (7) and on at least one working port (1, 2) to be varied as a function of the axial position of the control piston (5) and
d) with the control piston (5) having a thrust piece (12)
da) which, in a pressing-in region (13), is pressed with an outer lateral surface (14) into the control piston (5) into an inner lateral surface (15) of an end-side recess of the control piston (5) and
db) which is acted on by an actuator for generating a movement of the control piston (5),
**characterized in that**
e) a gap (49) is provided in the pressing-in region (13) of the thrust piece (12) between an outer lateral surface (51) of the control piston (5) and a guide bore (48) of the valve housing (4).

4. Control valve according to Claim 3,
**characterized in that**, in the pressing-in region (13) of the thrust piece (12), the outer lateral surface (51) of the control piston (5) has a partial region (47) of reduced diameter (cross-sectional constriction 46).

5. Control valve according to Claim 4,
**characterized in that** a guide surface (22) of the control piston (5) adjoins the partial region (47) of reduced diameter.

6. Control valve for influencing the action of a pressure medium on a camshaft adjuster of an internal combustion engine, having
a) a valve housing (4),
b) an axially movable control piston (5) which is arranged in the valve housing (4),
c) with it being possible for the action of a pressure medium on a pressure medium port (6), on a tank port (7) and on at least one working port (1, 2) to be varied as a function of the axial position of the control piston (5) and
d) with the control piston (5) having a thrust piece (12) which is acted on by an actuator for generating a movement of the control piston (5),
**characterized in that**
e) the thrust piece (12) has a hardened surface at least in the region of a contact surface (50) which interacts with the actuator.

7. Control valve according to Claim 6,
**characterized in that** the hardened surface is hardened using a deep-drawing process.

8. Control valve according to Claim 7,
**characterized in that** the use of the deep-drawing process is followed by a calibration stage.

9. Control valve according to one of Claims 6 to 8, **characterized in that** the hardened surface is hardened using a heat treatment process.

## Revendications

1. Soupape de commande pour influencer la sollicitation d'un régulateur d'arbre à cames d'un moteur à combustion interne avec un fluide de pression, comprenant :
a) un boîtier de soupape (4) et
b) un piston de commande (5) déplaçable axialement et disposé dans le boîtier de soupape (4),
c) une sollicitation d'un raccord de fluide de pression (6), d'un raccord de réservoir (7) et d'au moins un raccord de travail (1, 2) à un fluide de pression pouvant être modifiée en fonction de la position axiale du piston de commande (5), et
d) le piston de commande (5) présentant une pièce de pression (12),
da) qui est pressée dans une région de pressage (13) avec une surface d'enveloppe extérieure (14) dans une surface d'enveloppe intérieure (15) d'un évidement frontal du piston de commande (5) dans le piston de commande (5), et
db) sur laquelle un actionneur agit pour provoquer un déplacement du piston de commande (5),
**caractérisée en ce que**
e) la surface d'enveloppe extérieure et/ou intérieure présente au moins une région partielle (38), qui présente une plus petite rigidité par rapport à une déformation dans la direction radiale, qu'une autre région partielle (37).

2. Soupape de commande selon la revendication 1,
**caractérisée en ce que** des régions partielles (38) sont formées avec une rigidité réduite avec des évidements radiaux (23-26 ; 33-36).

3. Soupape de commande pour influencer la sollicitation d'un régulateur d'arbre à cames d'un moteur à combustion interne avec un fluide de pression, comprenant :
a) un boîtier de soupape (4) et
b) un piston de commande (5) déplaçable axialement et disposé dans le boîtier de soupape (4),
c) une sollicitation d'un raccord de fluide de pression (6), d'un raccord de réservoir (7) et d'au moins un raccord de travail (1, 2) à un fluide de pression pouvant être modifiée en fonction de la position axiale du piston de commande (5), et
d) le piston de commande (5) présentant une pièce de pression (12),
da) qui est pressée dans une région de pressage (13) avec une surface d'enveloppe extérieure (14) dans une surface d'enveloppe intérieure (15) d'un évidement frontal du piston de commande (5) dans le piston de commande (5), et
db) sur laquelle un actionneur agit pour provoquer un déplacement du piston de commande (5),
**caractérisée en ce que**
e) dans la région de pressage (13) de la pièce de pression (12) entre une surface d'enveloppe extérieure (51) du piston de commande (5) et un alésage de guidage (48) du boîtier de soupape (4) est prévue une fente (49).

4. Soupape de commande selon la revendication 3,
**caractérisée en ce que** dans la région de pressage (13) de la pièce de pression (12), la surface d'enveloppe extérieure (51) du piston de commande (5) présente une région partielle (47) de diamètre réduit (réduction de la section transversale 46).

5. Soupape de commande selon la revendication 4,
**caractérisée en ce qu'**une surface de guidage (22) du piston de commande (5) se raccorde à la région partielle (47) de diamètre réduit.

6. Soupape de commande pour influencer la sollicitation d'un régulateur d'arbre à cames d'un moteur à combustion interne avec un fluide de pression, comprenant :
a) un boîtier de soupape (4) et
b) un piston de commande (5) déplaçable axialement et disposé dans le boîtier de soupape (4),
c) une sollicitation d'un raccord de fluide de pression (6), d'un raccord de réservoir (7) et d'au moins un raccord de travail (1, 2) à un fluide de pression pouvant être modifiée en fonction de la position axiale du piston de commande (5), et
d) le piston de commande (5) présentant une pièce de pression (12), sur laquelle agit un actionneur pour provoquer un déplacement du piston de commande (5),
**caractérisée en ce que**
e) la pièce de pression (12) présente au moins dans la région d'une surface de contact (50) coopérant avec l'actionneur, une surface durcie.

7. Soupape de commande selon la revendication 6,
**caractérisée en ce que** la surface durcie est durcie en utilisant un procédé d'emboutissage profond.

8. Soupape de commande selon la revendication 7,
**caractérisée en ce que** l'on utilise à la suite du procédé d'emboutissage profond une étape d'étalonnage.

9. Soupape de commande selon l'une quelconque des revendications 6 à 8, **caractérisée en ce que** la surface durcie est durcie en utilisant un traitement thermique.
